Europäisches Patentamt

**European Patent Office**

**Office européen des brevets**

(19)

(11) Numéro de publication : **0 129 933 B2**

(12) # NOUVEAU FASCICULE DE BREVET EUROPEEN

(45) Date de publication du nouveau fascicule du brevet : **28.08.91 Bulletin 91/35**

(51) Int. Cl.$^5$ : **G21C 15/18**

(21) Numéro de dépôt : **84200880.7**

(22) Date de dépôt : **19.06.84**

---

(54) **Installation de refroidissement de sécurité pour réacteur nucléaire à eau.**

---

(30) Priorité : **24.06.83 BE 211065**

(43) Date de publication de la demande :
**02.01.85 Bulletin 85/01**

(45) Mention de la délivrance du brevet :
**01.06.88 Bulletin 88/22**

(45) Mention de la décision concernant
l'opposition :
**28.08.91 Bulletin 91/35**

(84) Etats contractants désignés :
**CH DE FR GB IT LI SE**

(56) Documents cités :
**DE-A- 3 036 232**
**FR-A- 2 150 856**

(56) Documents cités :
**GB-A- 1 212 299**
**US-A- 3 859 166**
**US-A- 4 181 570**
**US-A- 4 347 623**

(73) Titulaire : **WESTINGHOUSE ELECTRIC CORPORATION**
**Westinghouse Building Gateway Center**
**Pittsburgh Pennsylvania 15222 (US)**

(72) Inventeur : **Miler, Rajko**
**rue du Roetaert, 133**
**B-1180 Bruxelles (BE)**
Inventeur : **Guina, Milan**
**rue du Doyenne, 112**
**B-1180 Bruxelles (BE)**

(74) Mandataire : **Schmitz, Yvon et al**
**Bureau Gevers S.A. rue de Livourne 7 bte 1**
**B-1050 Bruxelles (BE)**

EP 0 129 933 B2

## Description

La présente invention est relative à une installation de refroidissement de sécurité pour le réacteur à eau des centrales nucléaires.

On sait qu'une centrale nucléaire doit être équipée de circuits de sécurité ou de sauvegarde qui ont pour but d'assurer avec un haut niveau de fiabilité le maintien de la centrale et en particulier du réacteur dans un état sûr et stable en cas d'accident. En particulier, les centrales utilisant l'eau comme fluide réfrigérant fonctionnel sont équipées de circuits permettant, en cas de dépressurisation du circuit primaire, d'injecter de l'eau sous pression pour refroidir le combustible et éviter sa fusion et, dans la plupart des cas, de circuits permettant d'injecter de l'eau finement divisée dans l'atmosphère de l'enceinte étanche entourant le réacteur, cette pulvérisation ayant pour but d'abaisser la pression dans l'enceinte, lorsque celle-ci est soumise à une brusque augmentation de pression suite à une rupture du circuit de réacteur, où il règne des pressions extrêmement élevées, par exemple de l'ordre de 150 bars.

L'eau injectée par ces circuits de sauvegarde est fournie par un ou plusieurs réservoirs situés généralement à l'extérieur de l'enceinte étanche entourant le circuit du réacteur. Dans le cas d'une rupture de la barrière de pression du circuit du réacteur, ces circuits de sécurité ou de sauvegarde entrent en service automatiquement. L'eau injectée par les circuits de sécurité se retrouve mélangée avec le fluide du réacteur dans la partie inférieure de l'enceinte étanche, appelée puisard. Compte tenu des débits d'injection énormes requis, les réservoirs extérieurs sont rapidement vidés et comme il est inacceptable d'opérer en circuit ouvert, compte tenu de la teneur importante en contaminants radioactifs de l'eau récupérée dans le puisard, il est donc nécessaire de recycler cette eau, de manière à maintenir noyé le combustible de réacteur et à éviter ainsi sa fusion.

Le passage de la phase d'« injection » à la phase de « recirculation » s'effectue en général automatiquement après une durée variante de 20 minutes à plusieurs heures, suivant l'importance de la brèche. Les règles de sécurité imposent de considérer que l'eau se trouvant dans le puisard de l'enceinte est à saturation, c'est-à-dire sous des conditions d'ébullition intense à 120°C-130°C. De telles conditions imposent des contraintes très sévères sur le choix et la disposition des pompes servant à l'extraction de l'eau de l'enceinte et aussi sur la disposition des tuyauteries reliant le puisard à ces pompes d'aspiration. En effet, en aucun point de ces tuyauteries il ne peut être toléré que l'eau atteigne cet état de saturation, ce qui aurait pour conséquence la formation de bouchons de vapeur qui bloqueraient la recirculation, d'où cavitation et destruction rapide des pompes.

Suivant les conceptions actuelles, les pompes sont installées dans un bâtiment auxiliaire très profond, par exemple à des profondeurs de 5 à 10 mètres en-dessous du puisard, de manière à obtenir la pression nécessaire à l'aspiration, tout en tenant compte des pertes de charges dans la tuyauterie reliant le puisard aux pompes. Une telle conception peut poser des problèmes importants de génie civil suivant la nature du terrain et les conditions sismiques du site.

Une autre solution consiste en l'utilisation de pompes verticales montées dans une virole cylindrique directement noyée dans la structure du bâtiment auxiliaire, la longueur de cette virole permettant d'obtenir la pression nécessair à l'aspiration sans nécessiter un bâtiment aussi profond.

Il est évident que ces conceptions, techniquement acceptables, sont extrêmement coûteuses et posent des problèmes d'installation très importants.

Il a également été fait usage de pompes spéciales directement montées dans le puisard de l'enceinte. Ces pompes d'extraction permettent de donner aux pompes de sauvegarde la pression à l'aspiration nécessaire. Ces pompes qui sont installées au fond du puisard, sont actionnées soit par un moteur immergé, soit par un moteur « sec » situé à une élévation suffisante pour qu'il ne puisse être noyé. De telles solutions, non seulement exigent des composants actifs, spécialement étudiés et qualifiés, c'est-à-dire des composants demandant de l'énergie électrique pour fonctionner et un entretien régulier, mais sont de plus en contradiction avec les règles de sécurité actuelles qui imposent une conception permettant l'entretien et la réparation possible des équipements actifs dans la période suivant l'accident. Or, avec de tels agencements, l'enceinte est absolument inaccessible pendant une durée pouvant atteindre plusieurs années, vu la très grande radioactivité qui y règne.

La modification de ces centrales de façon à les amener à un état de fiabilité conforme aux réglementations actuelles pose des problèmes extrêmement complexes et des risques non négligeables résultant de la nécessité de creuser une excavation importante auprès de l'enceinte. Une telle modification pourrait aussi bloquer la production pendant de longs mois, entraînant en plus des pertes financières énormes.

On se référera également au brevet US-A 4 181 570 concernant une installation de refroidissement de sécurité pour réacteur à eau d'une centrale nucléaire comportant un réservoir avec un liquide de refroidissement (voir colonne 4, lignes 45-52), des moyens d'aspiration et de refoulement, des moyens de reprise et d'amenée du liquide de refroidissement, des tubulures et conduits reliant lesdits moyens entre eux ainsi qu'avec l'enceinte étanche et des vannes pour autoriser ou interdire l'écoulement du liquide de refroidissement par les conduits et tubulures précités. Ce brevet US-A 4 181 570 décrit en outre l'utilisation d'un éjecteur dans le but de réduire la pression du matelas de vapeur qui pourrait s'établir au-dessus du coeur du réacteur suite à une brèche dans le circuit primaire, cette pression pouvant fortement ralentir le renoyage du coeur avec, comme conséquence, une élévation inacceptable de la température des gaines des crayons contenant la matière fissile. La réduction de pression résultant de l'opération de l'éjecteur permettrait d'accélérer le remplissage de la cuve avec l'eau injectée par la pompe extérieure. L'éjecteur n'aspire donc pas l'eau du puisard mais le mélange eau-vapeur se trouvant dans la partie supérieure de la cuve du réacteur. Cet éjecteur n'est en outre pas protégé par l'enceinte du réacteur.

Le document DE-AI-30 36 232 est relatif à un réacteur surgénérateur refroidi au gaz, qui comprend une enceinte logeant le réacteur et un circuit de refroidissement de sécurité, qui comprend une pompe à jet destinée à vaporiser l'eau de refroidissement de sécurité recueillie dans le récipient en dessous du coeur sur celui-ci, le tout étant agencé à l'intérieur de l'enceinte du réacteur.

Le réservoir 51 du document US-A-4 347 623 est different dans sa fonction de celle du réservoir 18. Le réservoir 51 est en fait utilisé pour produire une pression sensiblement réduite de manière à provoquer un jet de vapeur instantané ou important dans la pompe à jet 22. Au contraire, le récipient 18 procure une pression d'entrée suffisante à la pompe à pression 3 pour empêcher tout jet de vapeur important.

L'invention a pour but de procurer une installation de sécurité présentant la propriété de répondre aux exigences actuelles en matière de sécurité, par le fait que le composant monté dans l'enceinte, totalement passif ne demande pas d'entretien et n'exige pas la construction d'un bâtiment auxiliaire profond, éliminant ainsi tout risque de mise en cause de la stabilité des constructions existantes dans le cas d'une ancienne centrale et simplifiant grandement le génie civil dans le cas d'une nouvelle centrale.

A cet effet, l'installation suivant l'invention comprend un réservoir pour stocker un liquide de refroidissement, extérieur à l'enceinte étanche entourant le circuit du réacteur, une pompe agencée au moins pour aspirer le liquide du réservoir et pour refouler ce dernier dans ledit circuit, un éjecteur agencé pour reprendre le liquide et l'eau du réacteur en cas de brèche dans le circuit de ce dernier, après le passage dudit liquide au moins dans le circuit du réacteur, et les amener vers la pompe, des tubulures et conduits reliant la pompe et l'éjecteur entre eux ainsi qu'avec l'enceinte étanche et le réservoir et des vannes agencées pour autoriser ou interdire l'écoulement du liquide de refroidissement et de l'eau par les tubulures et conduits précités, ladite installation étant caractérisée en ce que l'éjecteur est situé dans la partie inférieure de l'enceinte et est agencé pour reprendre directement le liquide et l'eau du réacteur en cas de brèche dans le circuit du réacteur.

Suivant une forme de réalisation de l'invention, l'installation comprend, intercalée dans la tubulure reliant l'éjecteur au conduit qui relie le réservoir à la pompe, une cuve de séparation de débris, hermétique comportant une ouverture ménagée à sa partie supérieure à laquelle est raccordée la tubulure en provenance de l'éjecteur et une ouverture à sa partie inférieure à laquelle est raccordée la tubulure raccordant le conduit.

Suivant un mode de réalisation avantageux de l'invention, la cuve hermétique a son axe situé dans un plan sensiblement vertical et comprend, à son niveau le plus élevé, une buselure conduisant à l'enceinte, agencée pour permettre aux gaz ou vapeurs contaminés s'accumulant dans la partie supérieure de la cuve, lorsque les tubulures précitées sont remplies de liquide de refroidissement et d'eau, de s'échapper vers l'intérieur de ladite enceinte.

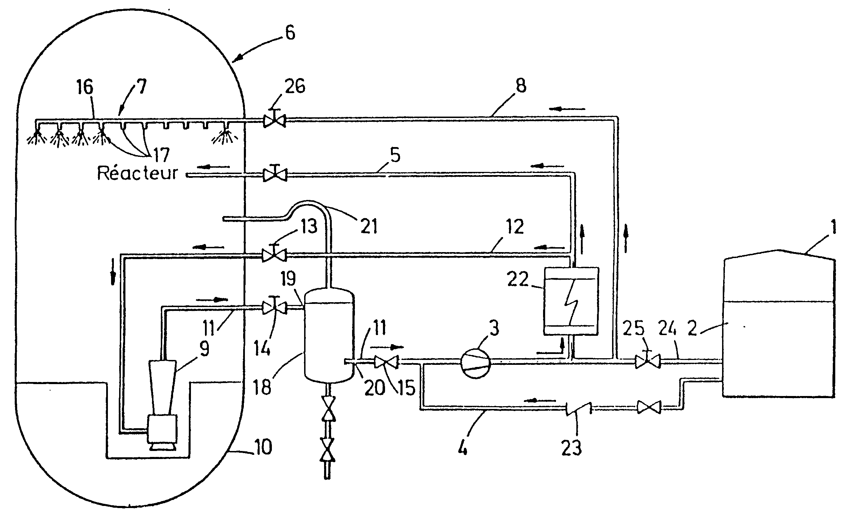

D'autres détails et particularités de l'invention ressortiront de la description du dessin annexé au présent mémoire et qui représente, à titre d'exemple non limitatif, une forme de réalisation particulière, schématisée de l'installation suivant l'invention.

L'installation de sécurité suivant l'invention et représentée par la figure unique du dessin annexé, comprend un réservoir 1 pour stocker un liquide de refroidissement 2, tel que de l'eau, une pompe 3, un conduit 4 reliant le réservoir 1 à la pompe 3 et un conduit 5 partant de la pompe 3 et aboutissant au circuit de réacteur à eau (non représenté) d'une centrale. La pompe 3 permet notamment d'aspirer le liquide de refroidissement 2 du réservoir et de refouler celui-ci ou une partie de celui-ci, par l'intermédiaire des conduits 4 et 5, dans le circuit du réacteur. Le réservoir 1, tout comme la pompe 3, sont disposés à l'extérieur de l'enceinte étanche 6 entourant le circuit du réacteur. Une rampe de pulvérisation 7 est agencée dans la partie supérieure de l'enceinte 6. Elle est formée d'un ou de plusieurs tubes de répartition 16 équipés de buses de pulvérisation 17 régulièrement réparties. Cette rampe est conçue pour projeter une partie du liquide de refroidissement 2 du réservoir 1, à l'intérieur de l'enceinte, sur au moins une partie importante du volume occupé par celle-ci, cette rampe 7 étant alimentée en liquide de refroidissement par la pompe 3, une tuyauterie 8 reliant à cet effet le conduit 5, en aval de la pompe 3, à la rampe.

Cette double injection d'eau permet non seulement de refroidir d'une manière efficace le circuit du réacteur, et d'empêcher ainsi la fusion de celui-ci, mais également de réduire la pression dans l'enceinte, en abaissant la température régnant à l'intérieur de celle-ci, lorsqu'une brèche survient dans le circuit du réacteur.

Pour passer de la phase d'injection à la phase de recirculation du liquide de refroidissement, l'installation comprend un éjecteur 9, cet éjecteur 9 permettant de reprendre le liquide de refroidissement tombant dans le puisard 10 de l'enceinte 6, mélangé à l'eau du réacteur en cas de brèche ou de rupture dans le circuit de celui-ci, et d'amener directement, ce mélange liquide, après le passage du liquide 2 dans le circuit du réacteur, vers la pompe 3. A cet effet, une tubulure 11 relie l'éjecteur 9 au conduit 4, en amont de la pompe 3 et une tubulure 12 raccorde le conduit 5, en aval de la pompe 3, à l'éjecteur 9. Une vanne 13 associée à la tubulure 12 et deux vannes 14 et 15 associées à la tubulure 11 sont agencées pour autoriser ou interdire l'écoulement du liquide de refroidissement et de l'eau provenant du circuit du réacteur.

Pour réamorcer l'éjecteur 9 et/ou pour élever la pression du liquide circulant dans les tubulures 11, 12 associées à l'éjecteur, l'installation comprend une cuve hermétique 18 dont l'axe est situé dans un plan vertical. Cette cuve 18, intercalée dans la tubulure 11 entre les vannes 14 et 15, comporte une ouverture 19 ménagée à sa partie supérieure, à laquelle est raccordée la portion de tubulure 11 en provenance de l'éjecteur 9, et une ouverture 20 ménagée à sa partie inférieure, à laquelle est raccordée la portion de tubulure 11 raccordant le conduit 4. Une buselure 21 conduisant à l'enceinte 6, est agencée pour permettre aux gaz ou vapeurs contaminés s'accumulant dans la partie supérieure de la cuve, lorsque les tubulures de l'éjecteur sont remplies de liquide de refroidissement et d'eau, de s'échapper vers l'intérieur de l'enceinte.

Des moyens 22, intercalés dans le conduit 5, en aval de la pompe 3, sont agencés pour contenir un fluide de refroidissement et permettre un échange de chaleur entre le liquide de refroidissement et l'eau du réacteur à refroidir, après le passage du liquide et éventuellement le l'eau du réacteur dans le circuit du réacteur, et ce fluide de refroidissement. L'installation comprend un clapet anti-retour 23 associé au conduit 4, agencé pour autoriser le passage du liquide de refroidissement et de l'eau vers la pompe 3 et pour interdire leur passage dans le sens inverse, c'est-à-dire pour interdire leur refoulement dans le réservoir 1.

Pour permettre de vérifier notamment le fonctionnement de la pompe 3 ou de remplir le réservoir 1 lorsque celui-ci est vide, on prévoit un conduit 24 reliant le conduit 5, en aval de la pompe 2, au réservoir 1 et une vanne 25 associée à ce conduit 24, qui est normalement fermée lors du fonctionnement de l'installation.

L'installation de refroidissement de sécurité de l'invention présente, outre les avantages susmentionnés, les avantages suivants comparativement aux installations traditionnelles :

1) l'éjecteur peut pomper sans problème une eau chargée de débris, tels que morceaux de béton, roches d'isolation thermique, etc., sans risque de destruction ;

2) l'éjecteur peut fonctionner avec une très faible pression à l'aspiration et résiste à la cavitation qui pourrait résulter soit d'une colmatation partielle de l'aspiration, soit d'une trop faible hauteur d'eau dans le puisard ;

3) l'éjecteur peut être aisément conçu d'une manière asismique ;

4) l'éjecteur peut être monté au point le plus approprié du point de vue du fonctionnement et de la protection contre tout missile éventuel ;

5) en cas d'obturation de l'aspiration, le debouchage peut être effectué par pression d'eau, en inversant la circulation de l'écoulement ;

6) le dimensionnement des pompes de sauvegarde étant conditionné par la phase d'injection, ces pompes ont une marge importante pendant la phase de recirculation, ce qui les rend suffisantes pour alimenter les éjecteurs.

Certaines installations ne sont pas équipées d'un circuit d'aspersion à l'intérieur de l'enceinte et d'autre part, lorsque ce circuit existe, il est préférable d'arrêter dès que possible la pulvérisation en fermant la vanne 26 de façon à limiter la dispersion d'eau contaminée sur les équipements et structures.

En conséquence, dans le cas le plus probable d'une rupture de faible dimension du circuit primaire, le débit de recirculation en l'absence de fonctionnement de l'aspersion est très faible, ce qui réduit fortement le taux d'évacuation de la chaleur emmagasinée dans l'eau du puisard.

L'installation de l'invention permet en outre, si on le désire, de maintenir un taux de recirculation important, assurant un refroidissement rapide de l'eau du puisard, avec effet direct sur la température de l'enceinte et par conséquent sur la pression qui y règne.

Le schéma de fonctionnement de l'installation de refroidissement de sécurité de l'invention peut être aisément compris en se référant à la figure annexée. Suite à une brèche conduisant à une dépressurisation du circuit du réacteur et, par conséquent, à une augmentation de la pression dans l'enceinte 6, la ou les pompes 3 sont automatiquement mises en service et injectent dans le circuit du réacteur et éventuellement à l'intérieur de l'enceinte, par l'entremise des conduits 4, 5 et 8, de l'eau sous une pression adéquate, l'eau étant puisée dans le réservoir de stockage 1. Lorsque le niveau de l'eau dans le réservoir 1 a atteint une limite inférieure préalablement déterminée, le circuit de l'éjecteur est mis en service manuellement ou automatiquement en ouvrant progressivement les vannes 13 et 14. L'éjecteur 9 reprend l'eau du puisard, c'est-à-dire l'eau d'injection provenant du réservoir de stokkage 1 et l'eau fonctionnelle provenant du circuit proprement dit du réacteur. Après un certain temps, le circuit de l'éjecteur est entièrement rempli d'eau, l'air qui contient des produits radioactifs contaminants ayant été chassé à l'intérieur de l'enceinte par la buselure d'évacuation 21 de la cuve 18. L'éjecteur 9 a également pour effet d'élever la pression de l'eau circulant dans les conduits, la pression de l'eau sortant de la cuve 18 par la portion de tubulure 11 étant sensiblement plus élevée que celle régnant dans le conduit 4, du côté réservoir. On ouvre alors la vanne 15, la pompe 3 étant alors alimentée à partir de l'eau en provenance du puisard 10 et de l'éjecteur 9. Cette eau, radioactive, n'est pas refoulée dans le réservoir 1 car le clapet anti-retour 23 bloque la circulation d'eau dans ce sens. L'échangeur de chaleur 22, refroidi par un autre circuit d'eau, permet d'abaisser rapidement la température de l'eau remise en circulation. L'eau est ensuite réinjectée dans le circuit du réacteur par le conduit 5 et éventuellement à l'intérieur de l'enceinte par le conduit 8. Une partie de l'eau du puisard passe également par la tubulure 12 et est renvoyée vers l'éjecteur 9. Pour une bonne compréhension, le circuit de l'éjecteur 9 est représenté en traits légèrement plus épais.

Le conduit de retour 24 vers le réservoir 1 est normalement fermé par la vanne 25 et n'est utilisé que pour vérifier le fonctionnement de la ou des pompes 3, pour le remplissage du réservoir 1 ou éventuellement pour d'autres fonctions. De plus, en cas d'arrêt momentané du circuit, par exemple lors d'une coupure de courant, l'éjecteur peut être réamorcé, soit en refermant les vannes 13, 14 et 15 et en faisant redémarrer l'injection à partir du réservoir 1 et en recommençant la séquence définie ci-dessus, soit en utilisant la réserve d'eau se trouvant dans la cuve d'amorçage 18, pour autant que celle-ci soit remplie.

On notera donc que l'eau en provenance du circuit du réacteur proprement dit, qui contient généralement une certaine quantité de bore, et le liquide de refroidissement provenant du réservoir de stockage, qui est également ordinairement de l'eau, et plus particulièrement de l'eau borique, circulent dans l'installation en circuit fermé, ce qui évite toute contamination éventuelle hors de l'enceinte et de l'installation précitées.

## Revendications

1. Installation de refroidissement de sécurité pour réacteur à eau d'une centrale nucléaire comprenant un réservoir (1) pour stocker un liquide de refroidissement (2), extérieur à une enceinte étanche (6) entourant le circuit du réacteur, une pompe (3) agencée au moins pour aspirer le liquide (2) du réservoir (1) et pour refouler ce dernier dans ledit circuit, un éjecteur (9) agencé pour reprendre le liquide (2) et l'eau du réacteur en cas de brèche dans le circuit de ce dernier, après le passage dudit liquide (2) au moins dans le circuit du réacteur, et les amener vers la pompe (3), des tubulures (11, 12) et conduits (4, 5) reliant la pompe (3) et l'éjecteur (9) entre eux ainsi qu'avec l'enceinte étanche (6) et le réservoir (1) et des vannes agencées pour autoriser ou interdire l'écoulement du liquide de refroidissement (2) et de l'eau par les tubulures (11, 12) et conduits (4, 5) précités, caractérisée en ce que l'éjecteur (9) est situé dans la partie inférieure de l'enceinte (6) et est agencé pour reprendre directement le liquide (2) et l'eau du réacteur en cas de brèche dans le circuit du réacteur et en ce qu'elle comprend, intercalée dans la tubulure (11) reliant l'éjecteur (9) au conduit (4) qui relie le réservoir (1) à la pompe (3), une cuve hermétique (18) comportant une ouverture (19) ménagée à sa partie supérieure à laquelle est raccordée la tubulure (11) en provenance de l'éjecteur (9), une ouverture (20) à sa partie inférieure à laquelle est raccordée la tubulure (11) raccordant le conduit (4), et une buselure (21) permettant aux gaz en vapeurs contaminés situés dans la partie supérieure de la cuve (18) de s'échapper.

2. Installation suivant la revendication 1, caractérisée en ce que la cuve hermétique (18) a son axe situé dans un plan sensiblement vertical et en ce que la buselure (21) est située au niveau le plus élevé, de la cuve (18) et conduit à l'enceinte (6), pour laisser les gaz ou vapeurs contaminés s'échapper vers l'intérieur de ladite enceinte (6).

3. Installation suivant l'une ou l'autre des revendications 1 et 2, caractérisé en ce qu'elle comprend un conduit (24) reliant le conduit (5), en aval de la pompe (3), au réservoir (1) et une vanne (25) normalement fermée, lors de l'utilisation de l'installation, associée à ce conduit (24), agencés pour permettre notamment de vérifier le fonctionnement de la pompe (3) ou de remplir le réservoir (1) lorsque celui-ci est vide.

4. Installation suivant l'une quelconque des revendications 1 à 3, caractérisée en ce que le liquide de refroidissement (2) et l'eau provenant du réacteur circulent dans l'installation en circuit fermé.

5. Installation suivant l'une quelconque des revendications 1 à 4, caractérisée en ce que le liquide de refroidissement (2) est de l'eau.

## Patentansprüche

1. Einrichtung zur Notkühlung eines wassergekühlten Kernreaktors eines Kernkraftwerks mit einem Speicher (1) zum Speichern einer Kühlflüssigkeit (2) außerhalb eines dichten, den Reaktorkreislauf umgebenden Behälters (6), einer Pumpe (1), die zumindest dafür ausgebildet ist, Flüssigkeit (2) von dem Speicher (1) anzusaugen und diese in den genannten Kreislauf zu fördern, einem Ejektor (9), der ausgebildet ist, um die Flüssigkeit (2) und das Wasser des Reaktors im Falle einer offenen Stelle in dem Kreislauf des letzteren nach dem Durchgang der genannten Flüssigkeit (2) zumindest durch den Kreislauf des Reaktors aufzunehmen und sie zu der Pumpe (3) zu führen, mit kurzen Rohren (11, 12) und Rohrleitungen (4, 5), die die Pumpe (1) und den Ejektor (9) miteinander sowie den dichten Behälter (6) und den Speicher (1) verbinden, und Ventilen, um die Strömung der Kühlflüssigkeit (2) und des Wassers durch die vorgenannten kurzen Rohre (11, 12) und Rohrleitungen (4, 5) zu gestatten oder zu unterbinden, **dadurch gekennzeichnet,** daß sich der Ejektor (9) im unteren Teil des Behälters (6) befindet und ausgebildet ist, um unmittelbar die Flüssigkeit (2) und das Wasser des Reaktors im Falle einer offenen Stelle im Reaktorkreislauf wieder aufzunehmen, daß sie, ein in das kurze Rohr (11), das den Ejektor (9) mit der Rohrleitung (4) verbindet, die den Speicher (1) mit der Pumpe (3) verbindet, eingeschaltetes, hermetisch geschlossenes Behältnis (18) aufweist, das eine an seinem oberen Ende ausgebildete Öffnung (19) aufweist, an der das kurze, von dem Ejektor (9) herkommende Rohr (11) angeschlossen ist, eine Öffnung (20) an seinem unteren Abschnitt aufweist, mit der das kurze Rohr (11) verbunden ist, an das die Rohrleitung (4) anschließt und eine Düse (21) aufweist, die kontaminierten Gasen oder Dämpfen, die in dem oberen Abschnitt des Behältnisses (18) vorliegen, erlauben zu entweichen.

2. Einrichtung nach Anspruch 1, **dadurch gekennzeichnet,** daß sich die Achse des hermetisch geschlossenen Behältnisses (18) in einer im wesentlichen vertikalen Ebene befindet, und daß die Düse (21) auf dem höchsten Niveau des Behältnisses (19) angeordnet ist und zum Behälter (6) führt, um die kontaminierten Gase oder Dämpfe nach dem Inneren des genannten Behälters (6) entweichen zu lassen.

3. Einrichtung nach Anspruch 1 oder 2, **dadurch gekennzeichnet,** daß sie eine Rohrleitung (24) aufweist, die die Rohrleitung (5) stromab der Pumpe (3) mit dem Speicher (1) verbindet, und ein mit dieser Leitung (24) verbundenes, bei der Verwendung der Einrichtung normalerweise geschlossenes Ventil (25) aufweist, die ausgebildet sind, um insbesondere die Funktionstüchtigkeit der Pumpe (3) überprüfen oder den Speicher (1) füllen zu können, wem dieser leer ist.

4. Einrichtung nach einem der Ansprüche 1 bis 3, **dadurch gekennzeichnet,** daß die Kühlflüssigkeit (2) und das von dem Reaktor herkommende Wasser mit geschlossenem Kreislauf in der Einrichtung zirkulieren.

5. Einrichtung nach einem der Ansprüche 1 bis 4, **dadurch gekennzeichnet,** daß die Kühlflüssigkeit (2) Wasser ist.

## Claims

1. A safety cooling installation for a water reactor of a nuclear power station, comprising a reservoir (1) for storing a cooling liquid (2), outside a containment (6) enclosing the circuit of the reactor, a pump (3) arranged at least for aspirating the liquid (2) from the reservoir (1) and for discharging the same into said circuit, an ejector (9) arranged for recovering the liquid (2) and the water from the reactor in the event of a break in the circuit of the latter after said liquid (2) has at least passed into the reactor's circuit, and transport the cooling liquid (2) and the water to the pump (3), the pipelines (11,12) and conduits (4,5) connecting the pump (3) and ejector (9), and the containment (6) and the reservoir (1), and valve means for permitting or stopping the discharge of cooling liquid (2) and water which pass through the pipe lines (11,12) and the conduits (4,5), characterised in that the ejector (9) is situated in the lower part of the containment (6) and is arranged for directly recovering the liquid (2) and the water from the reactor in the event of a break in the circuit of the reactor, a hermetically sealed tank (18) being incorporated in the pipe-line (11) connecting the ejector (9) to the conduit (4) which connects the reservoir (1) to the pump (3), the upper part of the tank (18) having an opening (19) to which is connected the pipe-line (11) coming from the ejector (9), the lower part of the tank (18) having an opening (20) to which is connected the pipe-line (11) connected to the conduit (4), a vent pipe (21) permitting gas or contaminated vapours situated in the upper part of the tank (18) to escape.

2. An installation according to claim 1, characterised in that the hermetically sealed tank (18) is disposed with its axis located in an essentially vertical plane, and is situated at the uppermost part of the tank (18) and connected to the containment (6) for allowing the gas or contaminated vapours to escape into the interior of said containment (6).

3. An installation according to one or the other of claims 1 and 2, characterised in that it comprises a conduit (24) which connects the conduit (5) downstream of the pump (3) to the reservoir (1), and a valve (25) which is normally closed while the installation is in use, and which is associated with the conduit (24), the valve being arranged to enable the functioning of the pump to be checked or to enable the reservoir to be filled when empty.

4. An installation according to any one of claims 1 to 3, characterised in that the cooling liquid and the water coming from the reactor circulate in the installation in a closed circuit.

5. An installation according to any one of claims 1 to 4, characterised in that the cooling liquid is water.